# EUROPEAN PATENT APPLICATION

(11) **EP 3 142 463 A2**
(43) Date of publication of application: **15.03.2017**
(21) Application number: 16187816.0
(22) Date of filing: 08.09.2016
(51) Int. Cl.: H05B 33/08, F21V 23/02, F21K 9/00

(54) **ILLUMINATING DEVICE**

(30) Priority: 08.09.2015 CN 201510567956
(71) Applicant: Ledvance GmbH, 85748 Garching ei München (DE)
(72) Inventor: YANG, Xusheng, Shenzhen 518053 (CN); HUANG, Kaichun, Shenzhen 518053 (CN)
(74) Representative: Nordmeyer, Philipp Werner

(57) **Abstract**

The present invention relates to an illuminating device that comprises a ballast (1), a driving means (2) connected with the ballast, and an illuminating load (3) driven by the driving means, wherein the ballast comprises a first coil unit (11) and a second coil unit (12a, 12b) coupled with the first coil unit, wherein the first coil unit outputs a first current from a power source to the driving means and the second coil unit, and the second coil unit outputs a second current to the driving means according to the first current, wherein the driving means comprises an auxiliary module (21a, 21b) receiving the first current and the second current, wherein the auxiliary module is configured to reduce the resonant frequency of the second coil unit so as to reduce the second current.

## Description

### Technical Field

The present invention relates to an illuminating device, in particular, to an LED illuminating device, wherein this LED illuminating device comprises a ballast, a driving means connected with this ballast, and an illuminating load driven by the driving means.

### Background Art

In the conventional illuminating devices, an electronic ballast (ECG) is arranged. The electronic ballast is configured to operate together with a fluorescent lamp as a load and provide a high-frequency current from the power source to the fluorescent lamp. The fluorescent lamp usually starts to run normally in the sequence of preheating, ignition, and normal run. The resistance of the filament in the fluorescent lamp generally is several ohms in a cold status, however, the resistance of the filament will be increased to at least 4 times of its initial value after the filament is heated up with the current passing by. Thus, the preheating circuit configured in the electronic ballast can provide a preheating current to the filament in the cold status, and once the filament is heated to make its resistance to be increased, the preheating current of the preheating circuit will become small. Compared with this, when an LED lamp tube replaces the conventional fluorescent lamp tube and is applied in an illuminating device with an electronic ballast, a preheating circuit of the electronic ballast will provide an undesirable, too high preheating current. The preheating current can hardly be reduced to the desirable level even if a resistor is connected downstream from the preheating circuit to reduce the preheating current, moreover, the resistor will cause undesirable consumption and waste of the electric energy.

### Summary of the Invention

In order to solve the above-mentioned technical problems, the present invention provides a novel illuminating device, in particularly an LED illuminating device. The illuminating device according to the present invention can notably reduce the undesirable energy consumption caused by the preheating current generated by the preheating circuit of the ballast, and has stronger system stability as the preheating current can be reduced. In order to enable the conventional illuminating devices such as fluorescent lamp to run normally, the conventional ballast needs to firstly provide a preheating current for preheating the filament of the illuminating load before providing a normal operation current to the illuminating device. However, the illuminating device according to the present invention can inhibit the preheating current which is not needed for the operation of for example the LED illuminating device, so as to reduce the unnecessary energy loss.

The object of the present invention is achieved through such an illuminating device that comprises a ballast, a driving means connected with the ballast, and an illuminating load driven by the driving means, wherein the ballast comprises a first coil unit and a second coil unit coupled with the first coil unit, wherein the first coil unit outputs a first current from a power source to the driving means and the second coil unit, and the second coil unit outputs a second current to the driving means according to the first current, wherein the driving means comprises an auxiliary module receiving the first current and the second current, wherein the auxiliary module is configured to reduce the resonant frequency of the second coil unit so as to reduce the second current.

The illuminating device according to the present invention can reduce the preheating current or the filament current by reducing the resonant frequency of the preheating coil of the ballast, wherein the preheating current or the filament current can be used to preheat the filament of the conventional fluorescent lamp, however, such preheating current or filament current is indispensable to for example the LED illuminating device as a load. The driving means of such illuminating device not only can be used to notably reduce the undesirable filament current for example in the stages such as start-up, preheating, ignition, and normal run of the conventional fluorescent lamp, i.e., during the overall running process of the ballast, but also can reduce the excessive energy loss caused by the conventional technology and improve the operation efficiency of the illuminating device, such that the driving means of the illuminating device can have improved compatibility used in for example the LED illuminating device.

According to a preferred embodiment of the present invention, the second coil unit comprises a first sub-coil and a second sub-coil, and the auxiliary module comprises a first auxiliary circuit and a second auxiliary circuit corresponding to the first sub-coil and the second sub-coil, respectively, wherein the first auxiliary circuit and the second auxiliary circuit reduce the resonant frequency of the first sub-coil and of the second sub-coil, respectively. The respective sub-coils can function in different preheating circuits or preheating coils in the ballast so as to inhibit the preheating current or the filament current which should have been used for heating the filament.

According to a further preferred embodiment of the present invention, the first auxiliary circuit is connected in series with the first sub-coil, and the second auxiliary circuit is connected in series with the second sub-coil. The auxiliary module comprising the first auxiliary circuit and the second auxiliary circuit can be simply connected and applied in a conventional ballast circuit.

According to a preferred embodiment of the present invention, the auxiliary module is configured to at least reduce the resonant frequency of the second coil unit to the half of the operating frequency of the ballast. In this situation, the driving means can reduce or inhibit the preheating current or the filament current provided by the ballast in an optimal manner.

According to a preferred embodiment of the present invention, the auxiliary module consists of inductive elements. The inductive element configured to be connected with the sub-coils of the second coil unit of the ballast can efficiently reduce the resonant frequency of the sub-coils such that the current output by the sub-coils to the illuminating load is reduced without great energy loss.

According to a preferred embodiment of the present invention, the first auxiliary circuit and the second auxiliary circuit consist of at least one inductor, respectively. The inductors of the first auxiliary circuit and the second auxiliary circuit can be configured to be formed by connecting a plurality of sub-inductors serially or in parallel.

According to a preferred embodiment of the present invention, the driving means further comprises a driving module, wherein the driving module is connected with an output end of the first auxiliary circuit and of the second auxiliary circuit through connection lines, respectively, and the connection lines equally divide inductances of the first auxiliary circuit and of the second auxiliary circuit, respectively.

According to a preferred embodiment of the present invention, the first coil unit is coupled to the second coil unit in a mutual inductive manner. The sub-currents from the sub-coils, after passing through the equally divided inductances of the first auxiliary circuit or the second auxiliary circuit, can be optimally reduced or inhibited.

According to a preferred embodiment of the present invention, the second coil unit is configured as a preheating coil of the ballast so as to provide a preheating current. The first sub-coil and the second sub-coil are configured as preheating coils which should have been used to heat for example the filament of the conventional illuminating device fluorescent lamp in the ballast.

According to a preferred embodiment of the present invention, the illuminating load consists of an LED illuminating part. The illuminating device according to the present invention can preferably use the LED technology, and the ballast of the illuminating device according to the present invention can be adapted to and compatible with the LED illuminating device.

### Brief Description of the Drawings

The accompanying drawings constitute a part of the present description and are used to provide further understanding of the present invention. Such accompanying drawings illustrate the embodiments of the present invention and are used to describe the principles of the present invention together with the description. In the accompanying drawings the same components are represented by the same reference numbers. As shown in the drawings:
Figure 1 shows a schematic diagram of a functional block of an illuminating device according to an embodiment of the present invention;
Figure 2 shows a schematic diagram of a circuit structure of the illuminating device according to the embodiment of the present invention.

### Detailed Description of the Embodiments

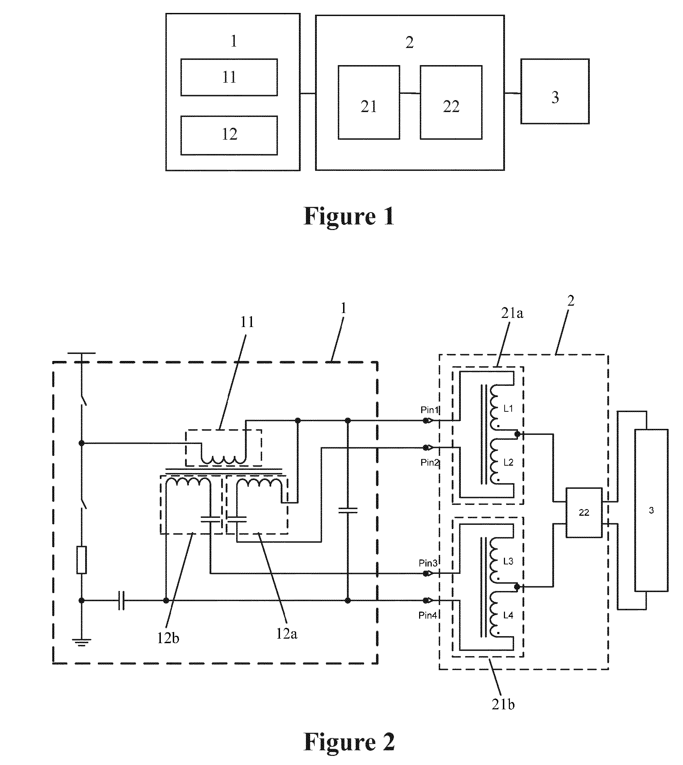

Figure 1 shows a schematic diagram of a functional block of an illuminating device 100 according to an embodiment of the present invention. The illuminating device 100 according to the present invention comprises a ballast 1, a driving means 2 connected downstream from the ballast 1, and an illuminating load 3, wherein the ballast 1 of the illuminating device 100 according to the present invention comprises a first coil unit 1 and a second coil unit 12 coupled with the first coil unit 11 in a mutual inductive manner. The driving means 2 comprises an auxiliary module 21 and a driving module 22 connected with the auxiliary module 21, wherein the auxiliary module 21 can be directly connected with the ballast. The ballast 1 of the illuminating device 100 according to the present invention can be used in a conventional fluorescent lamp. The first coil unit 11 of the ballast 1 can receive a supply current from a power source, and the auxiliary module 21 processes the current from the first coil unit 11 and the second coil unit 12 and provides the treated current to the driving means 2 and the illuminating load 3. The illuminating load 3 is manufactured through the LED technology, and comprises a plurality of LED chips.

Figure 2 shows a schematic diagram of a circuit structure of the illuminating device 100 according to the embodiment of the present invention. The ballast 1 of the illuminating device 100 according to the present invention comprises the first coil unit 11 connected to the power source and a first sub-coil 12a and a second sub-coil 12b coupled with the first coil unit 11, wherein the first sub-coil 12a and the second sub-coil 12b can form the second coil unit 12. The second coil unit 12 comprises the first sub-coil 12a and the second sub-coil 12b, wherein the first sub-coil 12a and the second sub-coil 12b can be designed as for example an LC circuit, respectively, and have a resonant frequency. The auxiliary module 21 comprises a first auxiliary circuit 21 a and a second auxiliary circuit 21 b, wherein the first auxiliary circuit 21 a is connected serially with the first sub-coil 12a through a first connection point Pin1 and a second connection point Pin2, and the second auxiliary circuit 21 b is connected serially with the second sub-coil 12b through a third connection point Pin3 and a fourth connection point Pin4. The auxiliary module 21 can consist of an induction element, for example, an inductor. The first auxiliary circuit 21 a and the second auxiliary circuit 21 b can consist of a single inductor, respectively, or can consist of connecting a plurality of inductors, respectively.

The first auxiliary circuit 21 a and the second auxiliary circuit 21 b each have an output end connected to the driving module 22 of the driving means 2 through a connection line, in this way, the connection lines can equally divide the inductances of the first auxiliary circuit 21 a and of the second auxiliary circuit 21 b, respectively, that is, for example, divide the inductance of the first auxiliary circuit 21 a into a first inductance L1 and a second inductance L2, and divide the inductance of the second auxiliary circuit 21 b into a third inductance L3 and a fourth inductance L4. Besides, in order to achieve the best effect, the first inductance L1 is equal to or proximate to the second inductance L2, and the third inductance L3 is equal to or proximate to the fourth inductance L4.

In order to reduce, as much as possible, a preheating current from the second coil unit 12, the first auxiliary circuit 21 a and the second auxiliary circuit 21 b can preferably at least reduce the resonant frequencies of the first sub-coil 12a and of the second sub-coil 12b to a half of the operation frequency of the ballast 1. In one embodiment, the first inductance L1 and the second inductance L2 with the same inductance value are set as 150µH, respectively, the inductance and the capacitance of the first sub-coil 12a of the ballast 1 are 10µH and 100nF, respectively, and this ballast 1 runs at the operation frequency of 43kHz, the first auxiliary circuit 21 a and the second auxiliary circuit 21 b can reduce the frequencies of the first sub-coil 12a and of the second sub-coil 12b to 20.62kHz. In another embodiment, the first inductance L1 and the second inductance L2 with the same inductance value are set as 150µH, respectively, the inductance and the capacitance of the first sub-coil 12a of the ballast 1 are 33µH and 47nF, respectively, and this ballast 1 runs at the operation frequency of 46kHz, the first auxiliary circuit 21 a and the second auxiliary circuit 21 b can reduce the frequencies of the first sub-coil 12a and of the second sub-coil 12b to 29.55kHz. In this way, the auxiliary module 21 of the ballast 1 according to the present invention can notably reduce the values of the preheating currents of the first sub-coil 12a and of the second sub-coil 12b.

The above is merely preferred embodiments of the present invention but not to limit the present invention. For the person skilled in the art, the present invention may have various alterations and changes. Any alterations, equivalent substitutions, improvements, within the spirit and principle of the present invention, should be covered in the protection scope of the present invention.

### List of reference signs

- 1: ballast
- 11: first coil unit
- 12: second coil unit
- 12a: first sub-coil
- 12b: second sub-coil
- 2: driving means
- 21: auxiliary module
- 21a: first auxiliary circuit
- 21b: second auxiliary circuit
- 22: driving module
- 3: illuminating load
- L1: first inductance
- L2: second inductance
- L3: third inductance
- L4: fourth inductance
- Pin1: first connection point
- Pin2: second connection point
- Pin3: third connection point
- Pin4: fourth connection point.

## Claims

1. An illuminating device (100), comprising a ballast (1), a driving means (2) connected with the ballast (1), and an illuminating load (3) driven by the driving means (2), wherein the ballast (1) comprises a first coil unit (11) and a second coil unit (12) coupled with the first coil unit (11), wherein the first coil unit (11) outputs a first current from a power source to the driving means (2) and the second coil unit (12), and the second coil unit (12) outputs a second current to the driving means (2) according to the first current, **characterized in that** the driving means (2) comprises an auxiliary module (21) receiving the first current and the second current, wherein the auxiliary module (21) is configured to reduce the resonant frequency of the second coil unit (12) so as to reduce the second current.

2. The illuminating device (100) according to claim 1, **characterized in that** the second coil unit (12) comprises a first sub-coil (12a) and a second sub-coil (12b), and the auxiliary module (21) comprises a first auxiliary circuit (21 a) and a second auxiliary circuit (21 b) corresponding to the first sub-coil (12a) and the second sub-coil (12b), respectively, wherein the first auxiliary circuit (21 a) and the second auxiliary circuit (21 b) reduce the resonant frequency of the first sub-coil (12a) and of the second sub-coil (12b), respectively.

3. The illuminating device (100) according to claim 2, **characterized in that** the first auxiliary circuit (21 a) is connected in series with the first sub-coil (12a), and the second auxiliary circuit (21 b) is connected in series with the second sub-coil (12b).

4. The illuminating device (100) according to claim 1, **characterized in that** the auxiliary module (21) is configured to at least reduce the resonant frequency of the second coil unit (12) to the half of the operating frequency of the ballast (1).

5. The illuminating device (100) according to claim 1, **characterized in that** the auxiliary module (21) consists of inductive elements.

6. The illuminating device (100) according to claim 1, **characterized in that** the first auxiliary circuit (21 a) and the second auxiliary circuit (21 b) consist of at least one inductor, respectively.

7. The illuminating device (100) according to claim 2, **characterized in that** the driving means (2) further comprises a driving module (22), wherein the driving module (22) is connected with an output end of the first auxiliary circuit (21 a) and of the second auxiliary circuit (21 b) through connection lines, respectively, and the connection lines equally divide inductances of the first auxiliary circuit (21 a) and of the second auxiliary circuit (21 b), respectively.

8. The illuminating device (100) according to claim 1, **characterized in that** the first coil unit (11) is coupled to the second coil unit (12) in a mutual inductive manner.

9. The illuminating device (100) according to claim 1, **characterized in that** the second coil unit (12) is configured as a preheating coil of the ballast (1) so as to provide a preheating current.

10. The illuminating device (100) according to claim 1, **characterized in that** the illuminating load (3) consists of an LED illuminating part.
